# EUROPEAN PATENT APPLICATION

(11) **EP 4 474 641 A1**
(43) Date of publication of application: **11.12.2024**
(21) Application number: 23745974.8
(22) Date of filing: 12.01.2023
(51) Int. Cl.: F03D 13/25, F03D 80/00, B63B 35/44, B63B 39/02

(54) **FLOATING WIND TURBINE, BALLASTING DEVICE THEREFOR, AND METHOD FOR CONTROLLING BALLASTING DEVICE**

(30) Priority: 27.01.2022 CN 202210101421
(71) Applicant: Huaneng Clean Energy Research Institute, Beijing 102209 (CN)
(72) Inventor: ZHOU, Yiming, Beijing 102209 (CN); LIU, Xin, Beijing 102209 (CN); FENG, Xuejiao, Beijing 102209 (CN); GUO, Xiaohui, Beijing 102209 (CN)
(74) Representative: Albert Catala, Andrea
(86) International application number: PCT/CN2023/071862
(87) International publication number: WO 2023/143091

(57) **Abstract**

A ballast device includes guide rails (21, 22) arranged inside a floating platform (1) and along the circumferential direction of the floating platform; ballast blocks (31,32) moving along the guide raisl to adjust the position of gravity center of the floating platform. By arranging guide rails in the floating platform and ballast blocks moving along the guide rails, the distribution of the gravity center of the floating platform is changed, and the shaking of the platform is reduced, thus improving the stability of the fan, reducing the flutter of blades, prolonging the service life of the fan and increasing the power generation. A floating wind turbine and a control method for the ballast device is also provided.

## Description

### TECHNICAL FIELD

The disclosure relates to the technical field of wind power generation, in particular to a floating wind power generator, a ballast device thereof and a control method for the ballast device.

### BACKGROUND

With the rapid development of the global wind energy industry, complete machine manufacturers of wind power units are constantly introducing new technologies and products to meet the needs of the market.

In which, the floating wind turbine is filled with helium in the base, which makes the wind turbine float on the sea surface, makes the fan rise to the air 300 meters away from the ground to catch strong wind, and drives the generators attached to the two ends of the horizontal shaft to generate electricity. This new type of wind turbine can work almost anywhere because of its floating characteristics.

However, the floating wind turbine will encounter the influence of waves and wind when the sponge floats, which makes the wind turbine shake, which may damage the mooring rope connected with the wind turbine during shaking and even cause the wind turbine to fall over.

Therefore, how to ensure the stability of floating wind turbine is an urgent problem for those skilled in this technical field.

### SUMMARY

In view of this, the disclosure provides a ballast device of a floating wind turbine to ensure the stability of the floating wind turbine. In addition, the disclosure also provides a floating wind turbine with the ballast device and a control method for the ballast device.

In order to achieve the above purpose, the disclosure provides the following technical scheme:
a ballast device for a floating wind turbine is provided and includes:
guide rails arranged inside a floating platform and arranged along a circumferential direction of the floating platform;
ballast blocks moving along corresponding the guide rails to adjust a gravity center position of the floating platform.

Preferably, in the ballast device, the ballast blocks are sleeved on the guide rails respectively, and each of the guide rails is provided with a rack along a length direction, and each of the ballast blocks is engaged with a corresponding one of the guide rails through a rotating gear.

Preferably, in the ballast device, the device further includes a driving motor for controlling a moving position, a moving direction and a moving speed of each of the ballast blocks.

Preferably, in the ballast device, the floating platform is a rectangular platform, and the guide rails are spliced into a rectangular frame;
the guide rails include two first guide rails arranged in parallel and opposite, and two second guide rails arranged in parallel and opposite, and the ballast blocks include first ballast blocks respectively moving along the first guide rails and second ballast blocks respectively moving along the second guide rails;
the driving motor is arranged in one-to-one correspondence with each of the first ballast blocks and each of the second ballast blocks.

Preferably, in the ballast device, the device further includes a measuring sensor for detecting an inclination angle and an inclination direction of the floating platform, where the measuring sensor is in signal connection with the driving motor, and each of the ballast blocks is moved in an opposite direction to the inclination direction of the floating platform by controlling the driving motor.

Preferably, in the ballast device, weights of the ballast blocks are 0.05%-2% of a weight of a machine head.

A floating wind turbine, including a ballast device, where the ballast device is the ballast device described in any one of the above.

A control method for a ballast device applied to the ballast device, including:
obtaining and storing a cycle period T of a floating platform circularly moving once, and simultaneously obtaining an inclination angle θx and an inclination direction of a unidirectional inclined floating platform relative to first guide rails, and an inclination angle θy and an inclination direction of the unidirectional inclined floating platform relative to second guide rails in the cycle period;
determining and storing final positions of first ballast blocks according to obtained inclination angle θx; determining final positions of second ballast blocks according to obtained inclination angle θy;
calculating and storing a moving average speed V 1 of each of the first ballast blocks, where V1 = d1/0.25T;
calculating and storing a moving average speed V2 of each of the second ballast blocks, where V2 = d2/0.25T;
storing a movement direction of each of the first ballast blocks according to obtained inclination direction of the floating platform relative to the first guide rails, and storing a moving direction of each of the second ballast blocks according to obtained inclination direction of the floating platform relative to the second guide rails.

Preferably, in the control method for a ballast device, the cycle period T of the floating platform includes a time of the floating platform moving once in two opposite directions.

Preferably, in the control method for a ballast device, update frequency of the moving average speed V1 and the final positions of the first ballast blocks and update frequency of the moving average speed V2 and the final positions of the second ballast blocks are both 0.5T, and update is started when the first ballast blocks and the second ballast blocks simultaneously move from initial positions for half the cycle period, respectively. Preferably, in the control method for a ballast device, determining final positions of the first ballast blocks according to obtained inclination angle θx specifically includes: presetting a maximum inclination angle θxmax of the floating platform relative to the first guide rails, and determining a distance Lx from an initial position of each of the first ballast blocks to a farthest end position of an inclination direction;
obtaining an inclination angle θx of the floating platform relative to the first guide rails; calculating and storing a moving distance d1 of each of the first ballast blocks at the inclination angle θx, where d1 = L * θx/θxmax;
determining a final position of each of the second ballast blocks according to obtained inclination angle θy specifically includes:
   presetting a maximum inclination angle θymax of the floating platform relative to the second guide rails, and determining a distance Ly from an initial position of each of the second ballast blocks to a farthest end position of an inclination direction;
   obtaining an inclination angle θy of the floating platform relative to the second guide rails; calculating and storing a moving distance d2 of each of the second ballast blocks at the inclination angle θy, where d2 = Ly * θy/θymax.

Preferably, in the control method for a ballast device, the initial position of each of the first ballast blocks is a center of each of the first guide rails in a longitudinal direction, and the initial position of each of the second ballast blocks is a center of each of the second guide rails in a longitudinal direction.

The disclosure provides a ballast device for a floating wind turbine. By arranging guide rails inside a floating platform and arranging ballast blocks moving along the guide rails, the distribution of the gravity center of the floating platform is changed, and the shaking of the platform is reduced, thereby improving the stability of the fan, reducing the flutter of blades, prolonging the service life of the fan and increasing the power generation.

In addition, the disclosure also provides a control method for the ballast device, and the self-adaptive ballast process of the floating wind turbine is realized by controlling the ballast device.

### BRIEF DESCRIPTION OF THE DRAWINGS

In order to explain the embodiments of the disclosure or the technical scheme in the prior art more clearly, the drawings needed to be used in the description of the embodiments or the prior art will be briefly introduced below. Obviously, the drawings in the following description are only some embodiments of the disclosure, and other drawings can be obtained according to these drawings without creative efforts for ordinary skilled in the field.
FIG. 1 is a schematic structural diagram of a ballast device of a floating wind turbine according to an embodiment of the disclosure;
FIG. 2 is an assembly diagram of first guide rails and first ballast blocks according to an embodiment of the disclosure;
FIG. 3 is a partially exploded diagram of A in FIG. 2;
FIG. 4 is a flowchart of the control method for the ballast device of the floating wind turbine according to the embodiment of the disclosure.

### DETAILED DESCRIPTION OF THE EMBODIMENTS

A ballast device for a floating wind turbine is provided to ensure the stability of the floating wind turbine. In addition, a floating wind turbine with the ballast device and a control method for the ballast device are provided.

In the following, the technical scheme in the embodiment of the disclosure will be clearly and completely described with reference to the attached drawings in the embodiment of the disclosure. Obviously, the described embodiment is only a part of the embodiments of the disclosure, but not all of embodiments. Based on the embodiments in this disclosure, all other embodiments obtained by ordinary skilled in this field without creative efforts belong to the scope of protection in this disclosure.

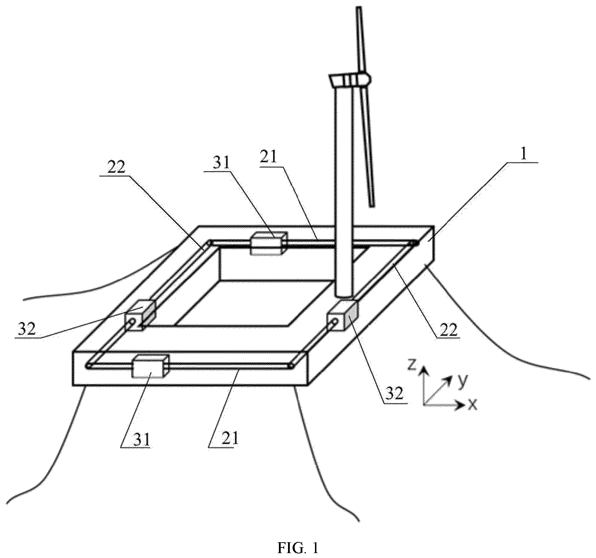

As shown in FIG. 1, a ballast device for a floating wind turbine is provided, which specifically includes a rectangular floating platform 1, first guide rails 21, second guide rails 22, first ballast blocks 31 and second ballast blocks 32.

In which, the floating platform 1 is the floating foundation of the whole floating wind turbine and serves as the installation foundation of the fan. The floating platform 1 in this disclosure is a rectangular platform, and the four top corners are respectively connected with mooring ropes. The floating platform 1 is hollow inside to form an accommodation space, and two first guide rails 21 and two second guide rails 22 are arranged in the accommodation space, and the first guide rails 21 and the second guide rails 22 are alternately connected to form a rectangular frame, and the two first guide rails 21 are arranged in parallel and oppositely, and correspondingly, the two second guide rails 22 are arranged in parallel and oppositely.

Two first guide rails 21 are respectively provided with a first ballast block 31, and two second guide rails 22 are respectively provided with a second ballast block 32. In practice, the shapes and sizes of these first ballast blocks 31 and second ballast blocks 32 may be the same, and the corresponding ballast blocks may be selected according to different needs. In order to prevent the floating platform 1 from inclination, it is preferable that the first ballast blocks 31 on the two first guide rails 21 are the same, and the second ballast blocks 32 on the two second guide rails 22 are the same.

The lengths of the first guide rails 21 and the second guide rails 22 need to be set according to the size of the floating platform 1. Preferably, the length direction of the first guide rail 21 is set as the X-axis direction and the length direction of the second guide rail 22 is set as the Y-axis direction.

By arranging guide rails in the floating platform and ballast blocks moving along the guide rails, the distribution of gravity center of the floating platform is changed, and the shaking of the platform is reduced, thus improving the stability of the fan, reducing the flutter of blades, prolonging the service life of the fan and increasing the power generation.

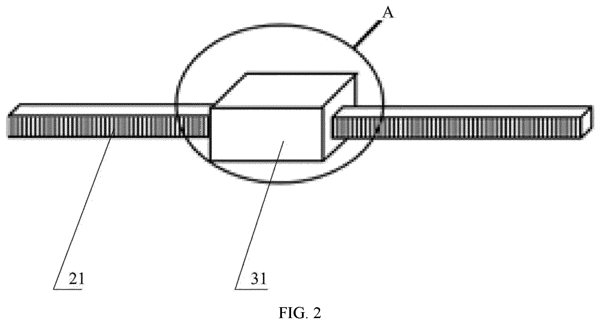

As shown in FIG. 2, the connection between the first guide rail 21 and the first ballast block 31 is provided. In practice, the connection between the second guide rail 22 and the second ballast block 32 is also the assembly relationship shown in FIG. 2. Specifically, the first ballast block 31 is sleeved on the first guide rail 21, and in this scheme, it is limited that the first ballast block 31 can move along the length direction of the first guide rail 21.

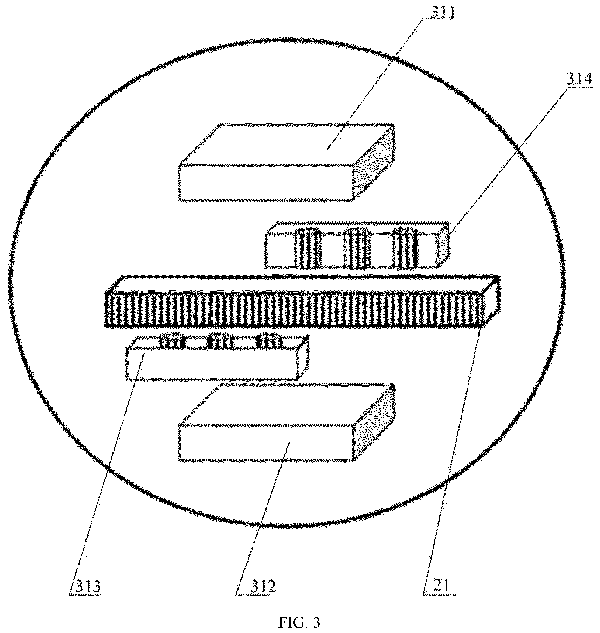

As shown in FIG. 3, the specific connection mode of the first guide rail 21 and the first ballast block 31 is provided: the first ballast block 31 includes an upper shell 311, a lower shell 312, a first side plate 313 and a second side plate 314. The upper shell 311, the lower shell 312, the first side plate 312 and the second side plate 313 are spliced and set on the first guide rail 21.

Specifically, the first guide rail 21 is a rectangular strip with a rack on its side, so correspondingly, a rectangular cavity adapted to the first guide rail 21 is formed among the upper shell 311, the lower shell 312, the first side plate 313 and the second side plate 314. The first side plate 313 is provided with a rotatable gear, and the first side plate 313 is provided with three gears along the length direction of the first guide rail 21, and all three gears are meshed with the rack on the first guide rail 21. It should be noted that the first side plate 313 and the second side plate 314 have the same structure, and correspondingly, two opposite side surfaces of the first guide rail 21 are provided with racks. When driving, the gears on the first side plate 313 and the second side plate 314 rotate at the same time, so that the first ballast block 31 moves along the first guide rail 21, which can improve the smooth movement of the first ballast block 31 and prevent jamming.

In practice, the connection mode of the first guide rail 21 and the first ballast block 31 is also suitable for the second guide rail 22 and the second ballast block 32, so the same connection mode and structure will not be repeated here, just refer to FIG. 2 and FIG. 3 directly.

In addition, it can be understood by those skilled in the art that the connection mode and structure of the second guide rail 22 and the second ballast block 32, and the connection mode and structure of the first guide rail 21 and the first ballast block 31 can all be set as a lead screw nut structure. That is, the first guide rail 21 and the second guide rail 22 are both set as lead screws, and correspondingly, the first ballast block 31 and the second ballast block 32 are both in nut structures which are in threaded engagement with the corresponding lead screws. In order to realize the linear movement, it is preferable to limit the nut structure to prevent it from rotating, so as to realize the movement along the lead screw.

In addition, the connection mode and structure of the first guide rail 21 and the first ballast block 31 may be different from that of the second guide rail 22 and the second ballast block 32.

On the basis of the above technical scheme, the disclosure also provides a driving motor driven in one-to-one correspondence with the first ballast block 31 and the second ballast block 32, and the movement of the first ballast block 31 and the second ballast block 32 can be realized through the action of the driving motor.

Because the core of this scheme is to alleviate the shaking of the floating platform 1, so as to ensure the stability of the floating platform 1 as much as possible and offset the influence of wind and waves, it is necessary to control the movement of the first ballast block 31 and the second ballast block 32 disclosed above in this disclosuren. In view of this, the ballast device disclosed in this disclosure further includes a measuring sensor. The measuring sensor is used to detect the inclination angle and inclination direction of the floating platform 1, and convert the signals detected by the measuring sensor into electrical signals of the driving motor, so as to control the driving motor to move the ballast block in the opposite direction to the inclination direction of the floating platform.

Take the first guide rail 21 as an example. When the first guide rail 21 is a rack and the first ballast block 31 is provided with a gear, the driving motor drives the first ballast block 31 to move. When the first guide rail 21 is a lead screw, the first ballast block 31 is installed at a circumferential limit, and the driving motor can drive the first guide rail 21 to rotate. The moving speed and distance of the first ballast block 31 are controlled by the rotation speed and start-stop of the driving motor.

In practice, the driving modes of the second guide rail 22 and the second ballast block 32 can be referred to above.

In a specific embodiment, the weights of the ballast blocks are 0.05%-2% of the weight of the machine head. The above arrangement avoids the influence of the excessive weight of ballast blocks on the normal floating of the floating platform 1, and can alleviate the problem of inclination. In practice, the specific weight of ballast blocks can be set according to different needs, and they are all within the protection range.

In addition, a floating wind turbine is provided and includes a ballast device, where the ballast device is the ballast device disclosed in the above embodiment, so the floating wind turbine with the ballast device also has all the above technical effects, and will not be described here.

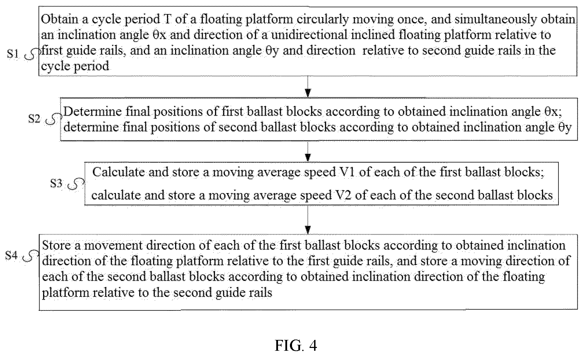

As shown in FIG. 4, a control method for ballast device is provided and is mainly applied to the ballast device disclosed in the above embodiment, and specifically includes the following control steps.

Step S1: parameters are obtained.

A cycle period T during which the floating platform circularly moves once is obtained, and an inclination angle θx and an inclination direction of the unidirectional direction inclined floating platform relative to the first guide rail and an inclination angle θy and an inclination direction of the unidirectional direction inclined floating platform relative to the second guide rail in the cycle period are simultaneously obtained.

It should be noted that the floating platform swings due to the action of wind and waves during floating, that is, it swings back and forth in two opposite directions. In practice, for the convenience of calculation and simulation, it is preferable that the effect of wind and waves on the floating platform is the same in a preset time, that is, the swinging motion of the floating platform is multiple complete motion cycles in this time period. In addition, the floating platform will swing back and forth in two directions under the action of wind and waves. Preferably, the farthest ends of the floating platform in two directions can be set to be symmetrical, so that the movement of the floating platform can be regarded as a symmetrical swinging movement.

Under the action of wind and waves, the swing of the floating platform will have components along the above-mentioned X-axis direction and Y-axis direction. The core of this disclosure is to relieve the swing in the corresponding direction by moving the ballast block.

To sum up, in this disclosure, the motion time of the reciprocating motion of the floating platform for one cycle is obtained, and the inclination angle of the floating platform relative to the first guide rail when the floating platform inclines in one direction is obtained and the inclination direction is determined, and the inclination angle of the floating platform relative to the second guide rail when the floating platform inclines in one direction is obtained and inclination direction is determined Combined with the motion characteristics of the floating platform, the inclination angle relative to the first guide rail and the inclination angle relative to the second guide rail can be obtained at the same time when the floating platform inclines in the other direction. It should be noted that the inclination angles of the two inclination directions relative to the first guide rail are the same, but the inclination directions are different. Similarly, the inclination angles of the two inclination directions relative to the second guide rail are the same, but the inclination directions are different.

Step S2: the final position of the first ballast block is determined and the final position of the second ballast block is determined.

Specifically, according to the obtained inclination angle θx, the final position of the first ballast block is determined to counteract the buoyancy of the floating platform at the inclined end and alleviate the shaking. According to the obtained inclination angle θy, the final position of the second ballast block is determined to counteract the buoyancy of the floating platform at the inclined end and alleviate the shaking.

In practice, the way to determine the final position of the first ballast block specifically includes the following steps.

Step S21: the maximum inclination angle θxmax of the floating platform relative to the first guide rail is preset, and the distance Lx from the initial position of the first ballast block to the farthest end of the inclination direction is determined.

In practice, the initial position of the first ballast block can be set as the center position of the first guide rail along the length direction, that is, when the first ballast block is located in the initial position, the gravity center of the floating platform is at the geometric center. When the length of the first guide rail is set as D1, it is preferable that Lx = D1/2.

For the preset maximum inclination angle θxmax, it can be the inclination angle when the floating wind turbine bears the maximum wind and waves.

Step S22: the inclination angle θx of the floating platform relative to the first guide rail is obtained.

In the actual swing process, the inclination angle θx of the floating platform relative to the first guide rail is different, so it is necessary to obtain the real-time inclination angle.

Step S23: the moving distance d1 of the first ballast block at the inclination angle θx is calculated and stored, where d1 = L * θx/θxmax.

That is, in this scheme, the moving distance of the first ballast block is set by equal proportion, which is obtained according to the ratio of the inclination angle to the maximum inclination angle.

Referring to the above-mentioned determination method of the final position of the first ballast block, the method for determining the final position of the second ballast block disclosed in this disclosure can adopt the above-mentioned determination method, specifically:
step S31: the maximum inclination angle θymax of the floating platform relative to the second guide rail is preset, and the distance Ly from the initial position of the second ballast block to the farthest end of the inclination direction is determined;
step S32: the inclination angle θy of the floating platform relative to the second guide rail is obtained;
step S33: the moving distance d2 of the second ballast block at the inclination angle θy is calculated and stored, where d2 = Ly * θy/θ ymax.

Because of the same way, the method for determining the final position of the second ballast block also has the above-mentioned effect, which is not repeated here.

Step S3: the moving average speed V1 of the first ballast block is calculated and stored, where V1 = d1/0.25T.

Through the above steps, the final position of the first guide rail at the first inclination angle has been determined, and the moving distance d1 corresponding to the inclination angle θx has been calculated and stored. In addition, since the whole cycle period T includes the maximum inclination angle of the floating platform from the initial position to the first direction, and then it is restored to the initial position, and then to the maximum inclination angle in the second direction, and then it is reset, The whole process can be regarded as the same time, so the moving average speed of the first ballast block is V1, and V1 = d1/0.25T. In practice, the first ballast block stops to the maximum speed and then gradually decreases, and the specific speed change is not limited here.

Step S4: the moving average speed V2 of the second ballast block is calculated and stored, where V2 = d2/0.25T.

For the analysis of the moving average speed of the second ballast block, please refer to the above analysis of the moving average speed of the first ballast block, which is not repeated here.

Step S5, the movement direction of the first ballast block is stored according to the obtained inclination direction of the floating platform relative to the first guide rail, and the movement direction of the second ballast block is stored according to the obtained inclination direction of the floating platform relative to the second guide rail.

By controlling the ballast device, the adaptive ballast process of the floating wind turbine is realized.

It should be noted that the movement direction of the first ballast block is to move in the direction that the floating platform is inclined and higher relative to the first guide rail, so as to make the floating platform sink at a higher position and alleviate the shaking. Similarly, the movement direction of the second ballast block is to move in the direction that the floating platform is inclined and higher relative to the second guide rail.

The above control logic is stored in the measuring sensor to control the driving motor and realize the movement of the driven ballast block.

In practice, the update frequency of the control logic stored in the measurement sensor is 0.5T. Specifically, the update is started when the first ballast block and the second ballast block respectively move from the initial position for half a cycle at the same time. Take the practical application as an example:
The above cycle period T, inclination angle θx, inclination angle θy, the final position of the first ballast block, the final position of the second ballast block, the moving average speed V1 and the moving average speed V2 can be first pre-stored according to the actual situation. When the ballast device is started, the floating platform starts to swing, and when the floating platform moves to the maximum inclination angle in the first direction and returns to the initial position, the first cycle period T, inclination angle θx, inclination angle θy, the final position of the first ballast block, the final position of the second ballast block, the moving average speed V1 and the moving average speed V2 are obtained at this time, and the control logic in the measurement sensor starts to be updated. That is, the above-mentioned cycle period T, inclination angle θx, inclination angle θy, and the final position of the first ballast block, the final position of the second ballast block, the moving average speed V 1 and the moving average speed V2 are updated.

The floating platform continues to move in the second direction, and moves from the initial position to the maximum inclination angle and then returns to the initial position, at which time it is completely updated for the second time.

From the above analysis, it can be seen that the driving motor in this disclosure executes the parameters obtained last time.

The cycle period T of the floating platform includes the time for the floating platform to move once in two opposite directions. That is, the whole movement process includes moving from the initial position to the farthest end in the first direction and then returning to the initial position, and then moving from the initial position to the farthest end along the second direction and then returning to the initial position, where the first direction and the second direction are opposite, and the specific direction is not limited.

In practice, the initial position is set when the first ballast block and the second ballast block are located in their respective central positions.

As shown in the disclosure and claims, unless the context clearly suggests an exception, the words "a", "an", "an" and/or "the" do not refer to the singular, but may also include the plural. Generally speaking, the terms "including" and "comprising" only imply the inclusion of clearly identified steps and elements, and these steps and elements do not constitute an exclusive list, and a method or device may also include other steps or elements. An element defined by the sentence "including a ..." does not exclude that there are other identical elements in the process, method, commodity or device including the element.

Each embodiment in this specification is described in a progressive way, and each embodiment focuses on the differences from other embodiments, the same and similar parts between the various embodiments can only be referred to each other.

The above description of the disclosed embodiments enables those skilled in the art to make or use the disclosure. Many modifications to these embodiments will be obvious to those skilled in the art, and the general principles defined herein can be implemented in other embodiments without departing from the spirit or scope of the disclosure. Therefore, the disclosure is not to be limited to the embodiments shown herein, but is to be conformed the widest scope consistent with the principles and novel features disclosed herein.

## Claims

1. A ballast device for a floating wind turbine, wherein the ballast device comprises:
guide rails arranged inside a floating platform and arranged along a circumferential direction of the floating platform;
ballast blocks moving along corresponding the guide rails to adjust a gravity center position of the floating platform.

2. The ballast device according to claim 1, wherein the ballast blocks are sleeved on the guide rails respectively, and each of the guide rails is provided with a rack along a length direction, and each of the ballast blocks is engaged with a corresponding one of the guide rails through a rotating gear.

3. The ballast device according to claim 2, further comprising a driving motor for controlling a moving position, a moving direction and a moving speed of each of the ballast blocks.

4. The ballast device according to claim 3, wherein the floating platform is a rectangular platform, and the guide rails are spliced into a rectangular frame;
the guide rails comprise two first guide rails arranged in parallel and opposite, and two second guide rails arranged in parallel and opposite, and the ballast blocks comprise first ballast blocks respectively moving along the first guide rails and second ballast blocks respectively moving along the second guide rails;
the driving motor is arranged in one-to-one correspondence with each of the first ballast blocks and each of the second ballast blocks.

5. The ballast device according to claim 4, further comprising a measuring sensor for detecting an inclination angle and an inclination direction of the floating platform, wherein the measuring sensor is in signal connection with the driving motor, and each of the ballast blocks is moved in an opposite direction to the inclination direction of the floating platform by controlling the driving motor.

6. The ballast device according to any one of claims 1-5, wherein weights of the ballast blocks are 0.05%-2% of a weight of a machine head.

7. A floating wind turbine, comprising a ballast device, wherein the ballast device is the ballast device according to any one of claims 1-6.

8. A control method for a ballast device applied to the ballast device according to claim 4 or 5, comprising:
obtaining and storing a cycle period T of a floating platform circularly moving once, and simultaneously obtaining an inclination angle θx and an inclination direction of a unidirectional inclined floating platform relative to first guide rails, and an inclination angle θy and an inclination direction of the unidirectional inclined floating platform relative to second guide rails in the cycle period;
determining and storing final positions of first ballast blocks according to obtained inclination angle θx; determining final positions of second ballast blocks according to obtained inclination angle θy;
calculating and storing a moving average speed V1 of each of the first ballast blocks, wherein V1 = d1/0.25T;
calculating and storing a moving average speed V2 of each of the second ballast blocks, wherein V2 = d2/0.25T;
storing a movement direction of each of the first ballast blocks according to obtained inclination direction of the floating platform relative to the first guide rails, and storing a moving direction of each of the second ballast blocks according to obtained inclination direction of the floating platform relative to the second guide rails.

9. The control method for a ballast device according to claim 8, wherein the cycle period T of the floating platform comprises a time of the floating platform moving once in two opposite directions.

10. The control method for a ballast device according to claim 8, wherein update frequency of the moving average speed V1 and the final positions of the first ballast blocks and update frequency of the moving average speed V2 and the final positions of the second ballast blocks are both 0.5T, and update is started when the first ballast blocks and the second ballast blocks simultaneously move from initial positions for half the cycle period, respectively.

11. The control method for a ballast device according to claim 8, wherein determining final positions of the first ballast blocks according to obtained inclination angle θx specifically comprises:
presetting a maximum inclination angle θxmax of the floating platform relative to the first guide rails, and determining a distance Lx from an initial position of each of the first ballast blocks to a farthest end of an inclination direction;
obtaining an inclination angle θx of the floating platform relative to the first guide rails;
calculating and storing a moving distance d1 of each of the first ballast blocks at the inclination angle θx, wherein d1 = L * θx/θxmax;
determining a final position of each of the second ballast blocks according to obtained inclination angle θy specifically comprises:
presetting a maximum inclination angle θymax of the floating platform relative to the second guide rails, and determining a distance Ly from an initial position of each of the second ballast blocks to a farthest end of an inclination direction;
obtaining an inclination angle θy of the floating platform relative to the second guide rails;
calculating and storing a moving distance d2 of each of the second ballast blocks at the inclination angle θy, wherein d2 = Ly * θy/θymax.

12. The control method for a ballast device according to claim 11, wherein the initial position of each of the first ballast blocks is a center of each of the first guide rails in a longitudinal direction, and the initial position of each of the second ballast blocks is a center of each of the second guide rails in a longitudinal direction.
